# EUROPÄISCHE PATENTSCHRIFT

(11) **EP 1 150 058 B1**
(45) Veröffentlichungstag und Bekanntmachung des Hinweises auf die Patenterteilung: **01.10.2003**
(21) Anmeldenummer: 00109273.3
(22) Anmeldetag: 28.04.2000
(51) Int. Cl.: F16L 59/10, F16L 59/22

(54) **Isolierstück für einen Rohrbogen**
Insulation element for a pipe elbow
Elément d'isolation pour un tuyau coudé

(43) Veröffentlichungstag der Anmeldung: 31.10.2001
(73) Patentinhaber: Armacell Enterprise GmbH, 48153 Münster (DE)
(72) Erfinder: Karl, Reinhard, 88171 Weiler (DE)
(74) Vertreter: Finck, Dieter, Dr.Ing.

(56) Entgegenhaltungen:
- EP-A- 0 546 874
- DE-A- 2 802 470
- FR-A- 2 041 278
- GB-A- 1 397 477

## Beschreibung

Die Erfindung betrifft ein Isolierstück für einen Rohrbogen nach dem Oberbegriff des Patentanspruchs 1.

Gemäß der EP 0 546 874 B1 wird ein Rohrbogen dadurch isoliert, daß aus einem Isolierschlauch, der in seiner Längsrichtung einen bis zu seinem Innenraum durchgehenden radialen Einschnitt aufweist, senkrecht zu seiner Achse keilförmige Abschnitte ausgeschnitten werden, die dann auf den Rohrkrümmer so aufgeschoben werden, daß sie aneinanderliegend mit vorher aufgebrachtem Klebstoff miteinander verbunden werden können. Die Anzahl der keilförmigen Abschnitte richtet sich nach dem Winkel, über den sich der Krümmer erstreckt, wobei sich die schmalen Seiten der keilförmigen Abschnitte auf der Krümmerinnenseite befinden. An die keilförmigen Abschnitte des Krümmers schließen sich dann gerade rohrförmige Isolierstücke an , die mit dem Isolierstück am Krümmer mittels Klebstoff haftend verbunden werden. Um eine Zentrierung der keilförmigen Abschnitte zu erleichtern, sind in ihren einander zugewandten Seiten Vorsprünge bzw. entsprechende Aussparungen ausgebildet.

Aus der GB 1 397 477 A und aus der FR 2 041 278 A sind Isolierstücke der gattungsgemäßen Art bekannt, die aus einem Zylinder aus elastischem Isoliermaterial, insbesondere Schaumstoff, bestehen. Der Zylinder hat einen sich zwischen seinen Stirnflächen erstreckenden, in seinem Querschnitt der Rohrabmessung angepaßten zentralen Kanal, einen sich von dem Kanal bis zur Zylinderaußenwand radial in einer Axialebene erstreckenden Einschnitt, und wenigstens eine keilförmige Aussparung, die sich ausgehend von der Zylinderaußenwand senkrecht zur Ebene des Einschnitts und zu beiden Seiten davon unter Bildung von zwei Stirnteilen so weit in den Zylinder erstreckt, daß zwischen der Keilkante der keilförmigen Aussparung und der Zylinderaußenwand ein als Scharnier wirkender Verbindungsabschnitt bestehen bleibt.

Durch Entfernen von Material in Form der keilförmigen Aussparungen entstehen über die Verbindungsabschnitte zusammenhängende Teilsegmente, die durch Verkleben miteinander haftend verbunden werden, wobei sich dann der Einschnitt auf der Seite des Rohrbogens mit dem kleinen Bogendurchmesser befindet. Für einen 90°-Rohrbogen werden aus dem Zylinder gewöhnlich vier keilförmigen Aussparungen entfernt, so daß insgesamt fünf Keilsegmente verbleiben, deren Keilenden aufeinanderliegen.

Es hat sich gezeigt, daß die Ausbildung bzw. Montage der bekannten Isolierstücke für einen Rohrbogen auf der Baustelle sehr zeitaufwendig ist.

Die der Erfindung zugrundeliegende Aufgabe besteht deshalb darin, das vorstehend beschriebene Isolierstück für einen Rohrbogen so auszugestalten, daß an der Baustelle eine schnelle und einfache Montage möglich ist.

Diese Aufgabe wird bei dem eingangs beschriebenen Isolierstück für einen Rohrbogen dadurch gelöst, daß das eine Stirnteil auf der von der keilförmigen Aussparung gebildeten Wandfläche eine sich senkrecht zur Ebene des Einschnitts und im wesentlichen zu beiden Seiten des Kanals erstreckende vorstehende Schnappleiste oder Schnappaussparung aufweist, während an dem anderen Stirnteil auf der von der keilförmigen Aussparung gebildeten Wandfläche eine sich senkrecht zur Ebene des Einschnitts und im wesentlichen zu beiden Seiten des Kanals erstreckende ergänzende Schnappaussparung oder Schnappleiste so vorgesehen ist, daß in der den Rohrbogen umschließenden Lage des Isolierstücks die Schnappleiste und die Schnappaussparung in Schnappeingriff stehen.

Die Aufgabe wird bei dem eingangs beschriebenen Isolierstück für einen Rohrbogen mit wenigstens zwei keilförmigen Aussparungen, die sich senkrecht zur Ebene des Einschnitts und zu beiden Seiten davon erstrecken und die zwei Stirnteile und wenigstens einen Mittelkeil bilden, ferner dadurch gelöst, daß der Mittelkeil auf seinen beiden Keilflächen jeweils eine sich senkrecht zur Ebene des Einschnitts und im wesentlichen zu beiden Seiten des Kanals erstreckende vorstehende Schnappleiste oder einspringende Schnappaussparung aufweist, und daß in den von den keilförmigen Aussparungen gebildeten Wandflächen der beiden Stirnteile des Zylinders sich senkrecht zur Ebene des Einschnitts und im wesentlichen zu beiden Seiten des Kanals erstreckende ergänzende Schnappaussparung oder Schnappleiste so vorgesehen sind, daß in der den Rohrbogen umschließenden Lage des Isolierstücks die Schnappleisten und Schnappaussparungen in Schnappeingriff stehen.

In diesen Ausgestaltungen hat das Isolierstück einen oberen Stirnteil und einen unteren Stirnteil bzw. einen oberen Stirnteil, einen Mittelkeil und einen unteren Stirnteil, die längs der Verbindungsabschnitte zusammenhängen und die nach Aufbringen auf ein Rohr über den Rohrbogen geschoben werden, wobei die Verbindungsteile Scharniere bilden und die Schnappleisten und Schnappaussparungen von selbst in Eingriff kommen.

Zur besseren Anpassung an den Rohrbogen hat der Zylinder einen von der Seite des Einschnitts in die Zylinderaußenwand ausgehenden Ausschnitt in Form eines Zylindersegments mit unter einem dem halben Rohrbogenwinkel entsprechenden Winkel zur Ebene des Einschnitts und aufeinander zu geneigte Stirnflächen und einen zur Achse des Zylinders parallelen und zur Ebene des Einschnitts senkrechten Wandabschnitt. In diesem Wandabschnitt liegen die ebenen Grundflächen der beiden keilförmigen Aussparungen.

Für einen 90°-Rohrbogen sind die Stirnflächen des Ausschnitts für das Zylindersegment unter einem Winkel von 45° zur Ebene des Einschnitts und aufeinander zu geneigt. Dabei ist der Mittelkeil durch wenigstens eine weitere mit ihrer Grundfläche in dem Wandabschnitt des Zylindersegments liegende und mit ihrer Keilkante vor einem Verbindungsabschnitt endende keilförmige Aussparung in zwei Keilabschnitte unterteilt, deren Keilkanten im wesentlichen in der Ebene des Wandabschnitts des Zylindersegments liegen und die an den einander zugewandten Wandflächen eine sich senkrecht zur Ebene des Einschnitts und im wesentlichen zu beiden Seiten des Kanals erstreckende Schnappleiste und eine Schnappaussparung mit gleicher Erstreckung für den gegenseitigen Eingriff aufweisen.

Bei dieser Ausgestaltung des Isolierstücks sind die Schnappaussparung und die Schnappleiste zwischen den beiden Keilabschnitten im Querschnitt kleiner als die übrigen Schnappleisten und Schnappaussparungen, so daß die Dicke des entsprechenden Keilabschnitts nicht zu sehr geschwächt wird, auch wenn sich die Schnappaussparung des einen Keilabschnitts dort befindet, wo sich auf der anderen Keilfläche die stärkere Schnappleiste nach außen erstreckt.

Zweckmäßigerweise sind die Keilwinkel der keilförmigen Aussparungen gleich groß.

Anhand von Zeichnungen werden beispielsweise Ausführungsformen der Erfindung näher erläutert. Es zeigt:
- Fig. 1: eine Seitenansicht des Isolierstücks für einen Rohrbogen in Zylinderform,
- Fig. 2: das Isolierstück von Fig. 1 in einer Ansicht in Richtung des Pfeils A von Fig. 1,
- Fig. 3: eine Draufsicht auf das Isolierstück von Fig. 1,
- Fig. 4: das Isolierstück von Fig. 1 um den Rohrbogen herum montiert,

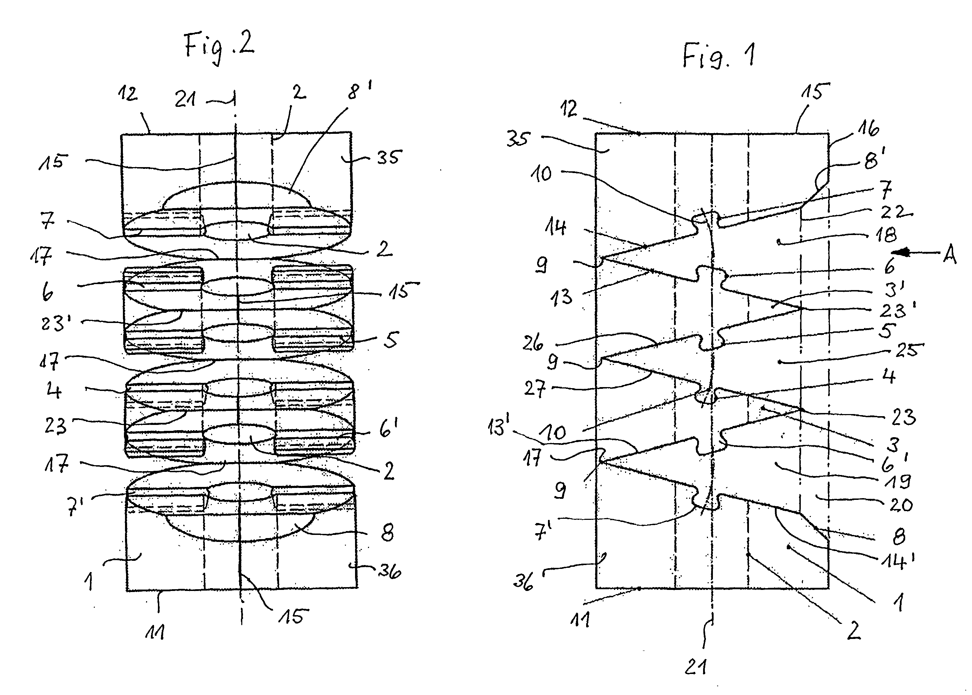

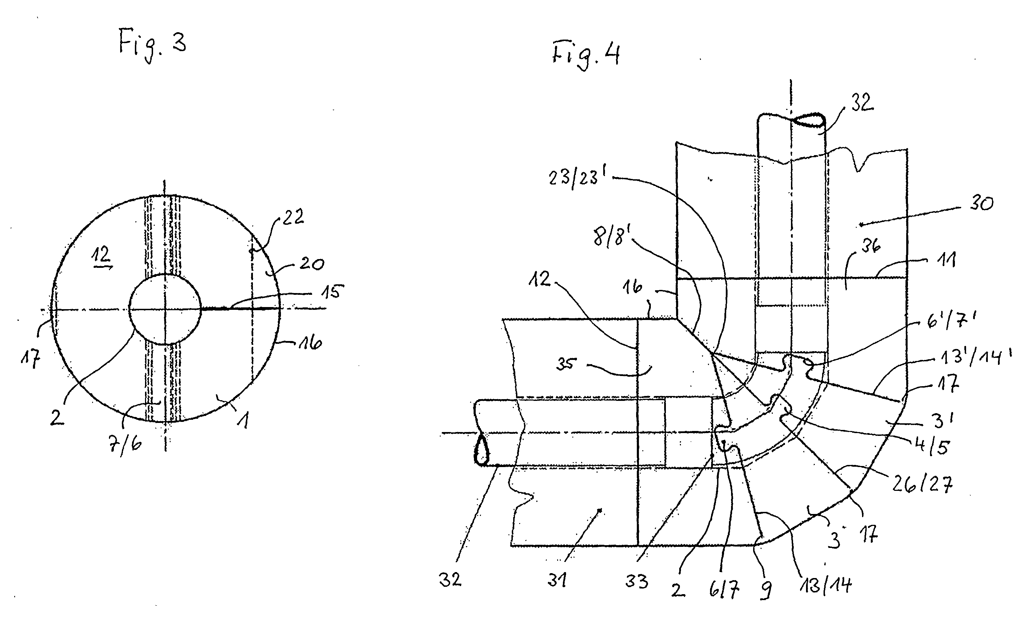

Das in den Fig. 1 bis 3 gezeigte Isolierstück besteht aus einem Zylinder 1 aus einem Isoliermaterial, beispielsweise einem Schaumstoff. Der Zylinder 1 hat eine Zylinderaußenwand 16, eine untere Stirnfläche 11 und eine obere Stirnfläche 12 sowie eine Achse 21. Koaxial zur Achse 21 erstreckt sich durch den Zylinder ein zentraler Kanal 2, dessen Durchmesser dem Rohrdurchmesser des zu isolierenden Rohrbogens 33 (Fig. 4) entspricht.

In dem Zylinder 1 ist ein Einschnitt 15 ausgeführt, der sich in Radialrichtung längs einer durch die Achse 21 gehenden Axialebene erstreckt, in Fig. 1 rechts von der Zylinderaußenwand 16 ausgeht und sich bis in den zentralen Kanal 2 erstreckt, so daß der Zylinder 1 längs des Einschnitts 15 durch elastische Verformung des Materials so weit aufgeweitet werden kann, daß er achsparallel über ein nicht gezeigtes gerades Rohr 32 (Fig. 4) geschoben werden kann, bis dieses in den zentralen Kanal 2 eingeführt ist.

Zur Herstellung des Isolierstücks muß aus dem Zylinder 1 zunächst symmetrisch und zu beiden Seiten der Axialebene des Einschnitts 15 in einem festgelegten Abstand von der oberen Stirnfläche 12 und der unteren Stirnfläche 11 ein Zylindersegment 20 entfernt werden, das von einer oberen Stirnfläche 8' und einer unteren Stirnfläche 8, die jeweils unter 45° zu entsprechenden radialen Ebenen und aufeinander zu geneigt sind, einem Teil der Zylinderaußenwand 16 und einem achsparallelen Wandabschnitt 22 gebildet wird, der, wie aus Fig. 1 zu ersehen ist, sich senkrecht zur Ebene des Einschnitts 15 mit Abstand zum Kanal 2 erstreckt.

Anschließend werden von der gleichen Seite her, also in Fig. 1 von rechts in Richtung des Pfeils A, in Längsrichtung der Achse 21 in gleichen Abständen zueinander drei gleiche keilförmige Aussparungen 18, 25 und 19 ausgebildet. Jede der Aussparungen 18, 25 und 19 hat einen Keilwinkel von etwa 30°, wobei ihre ebenen Grundflächen in dem Wandabschnitt 22 des Zylindersegments 20 liegen und ihre jeweils in einer Radialebene liegenden Keilkanten 9 in einem Abstand von der Zylinderaußenwand 16, in Fig. 1 auf der linken Seite enden. Dadurch werden drei Verbindungsabschnitte 17 ausgebildet (Fig. 2), deren Dicke zwischen den Keilkanten 9 und der Zylinderaußenwand 16 so bemessen ist, daß der Zusammenhalt des Zylinders 1 gewährleistet bleibt, die Verbindungsabschnitte 17 jedoch eine Scharnierfunktion ausüben können, wenn der Zylinder 1 zu dem in Fig. 4 gezeigten Isolierstück umgeformt wird.

Durch die Materialentfernung bei Ausbildung der keilförmigen Aussparung 18 werden die zur zugehörigen Keilkante 9 konvergierenden Wandflächen 14 und 13 gebildet. Die Aussparung 25 ergibt die Wandflächen 26 und 27, die Aussparung 19 die Wandflächen 13' und 14', die ebenfalls jeweils zu ihrer Keilkante 9 konvergieren.

Aufgrund der Aussparungen 18, 25 und 19 verbleiben von jedem Zylinder 1 vier Teile, die längs der Verbindungsabschnitte 17 zusammenhängen, nämlich ein oberer Stirnteil 35 und ein unterer Stirnteil 36 und zwei gleiche dazwischenliegende Keilabschnitten 3' und 3, deren in einer Radialebene liegenden Keilkanten 23' und 23 in der Ebene des Wandabschnitts 22 des Zylindersegments 20 enden. Die Keilwinkel der Keilabschnitte 3 und 3' betragen ebenfalls etwa 30° oder etwas weniger, um im montierten Zustand eine Vorspannung zu erzielen.

In der Wand 14 des oberen Stirnteils 35 ist eine Schnappaussparung 7 ausgebildet, die sich im Bereich des zentralen Kanals 2 zu dessen beiden Seiten senkrecht zur Ebene des Einschnitts 15 erstreckt. Gegenüber der Schnappaussparung 7 ist auf der ihr zugewandten Wandfläche 13 des Keilabschnitts 3' eine Schnappleiste 6 ausgebildet, die sich ebenfalls zu beiden Seiten des zentralen Kanals 2 senkrecht zu der Ebene des Einschnitts 15 erstreckt und so angeordnet ist, daß sie beim Aufschieben des Isolierstücks auf dem Rohrbogen längs des Bogens 10 in Fig. 1 verschwenkt wird und dabei in Schnappeingriff mit der Schnappaussparung 7 im oberen Stirnteil kommt.

In gleicher Weise ist in der Wandfläche 14' des unteren Stirnteils 36 eine entsprechende Schnappaussparung 7' ausgebildet, der eine Schnappleiste 6' an der zugewandten Wandfläche 13' des Keilabschnitts 3 zugeordnet ist. Da sich die Schnappaussparungen 7, 7' in einem Materialteil mit großer Dicke befinden, können sie mit einer relativ großen Querschnittsfläche ebenso wie die zugeordneten Schnappleisten 6', 6 ausgebildet werden, wodurch eine stabile Schnappverbindung erreicht wird. Bei dem gezeigten Ausführungsbeispiel wird der Schnappeingriff durch eine schwalbenschwanzförmige Ausgestaltung der Schnappleisten 6, 6' und der Schnappaussparungen 7, 7' erreicht.

An der Wandfläche 26 des Keilabschnitts 3' ist eine Schnappleiste 5 ausgebildet, der an der Wandfläche 27 des Keilabschnitts 3 eine über einen Bogen 10 entsprechende Schnappaussparung 4, ebenfalls in Schwalbenschwanzausgestaltung, zugeordnet ist, wobei jedoch die Querschnittsflächen im Vergleich zu den Schnappleisten 6, 6' und den Schnappaussparungen 7, 7' etwas kleiner sind, um die Querschnittsabmessung des Keilabschnitts 3 nicht zu sehr zu schwächen, auch wenn der Schnappaussparung 4 in der Fläche 27 des Keilabschnitts 3 die Schnappleiste 6' mit größerem Querschnitt an der Wandfläche 13' in etwa gegenüberliegt.

Wie aus Fig. 4 zu sehen ist, hat der Rohrbogen 33 eine Krümmung von 90° und ist mit Rohren 32 verbunden. Der Monteur weitet den Zylinder 1 am Einschnitt 15 elastisch auf und schiebt ihn auf eines der Rohre 32, bis sich das Rohr 32 in dem zentralen Kanal 2 befindet. Danach kehren die Flächen des Einschnitts 15 aufgrund der elastischen Rückstellkräfte des Materials in ihre Ausgangsstellung zurück, in welcher sie im wesentlichen aufeinanderliegen. Anschließend schiebt der Monteur den Zylinder 1 über den Rohrbogen 33.

Dadurch liegen, wie in Fig. 4 zu sehen ist, die Wandflächen 13 und 14 aufeinander, wobei die Schnappleiste 6 in die Schnappaussparung 7 eingreift und die Wandfläche 13 und 14 gegeneinanderzieht. Der Verbindungsabschnitt 17 wirkt dabei als Scharnier. Gleichermaßen liegen die Wandflächen 26 und 27 aneinander, wobei die Schnappleiste 5 in die Schnappaussparung 4 eingreift. Ferner liegen die Wandflächen 13' und 14' bei Eingriff der Schnappleiste 6' in die Schnappaussparung 7' aneinander. Die Keilkanten 23 und 23' der Keilabschnitte 3 und 3' liegen auf einer Linie, von der ausgehend auch die geneigten Stirnflächen 8 und 8' aneinanderliegen, während die Zylinderaußenwand 16 des oberen Stirnteils 35 und die des unteren Stirnteils 36 einen rechten Winkel begrenzen. Die Stirnflächen 11 und 12 sind nun zueinander unter einem rechten Winkel angeordnet und erstrecken sich jeweils in einer Radialebene bezüglich des Rohrs 32, so daß zylindrische Rohrisolierstücke 33 bzw. 31 an die Stirnflächen 11 und 12 problemlos angeschlossen werden können.

## Patentansprüche

1. Isolierstück für einen Rohrbogen, bestehend aus einem Zylinder (1) aus elastischem Isoliermaterial, insbesondere Schaumstoff,
- mit einem sich zwischen seinen Stirnflächen (11, 12) erstreckenden, in seinem Querschnitt der Rohrabmessung angepaßten zentralen Kanal (2),
- mit einem sich vom Kanal (2) bis zur Zylinderaußenwand (16) radial in einer Axialebene zwischen den Stirnflächen (11, 12) erstreckenden Einschnitt (15), und
- mit wenigstens einer keilförmigen Aussparung, die sich senkrecht zur Ebene des Einschnitts (15) und zu beiden Seiten davon unter Bildung von zwei in einer Keilkante zusammenlaufenden Stirnteilen (35, 36) erstreckt, und
- mit einem zwischen der Keilkante (9) und der Zylinderaußenwand (16) angeordneten Verbindungsabschnitt (17) mit einer den Zusammenhalt des Zylinders (1) und eine Scharnierfunktion gewährleistenden Dicke,
**dadurch gekennzeichnet,**
- **daß** das eine Stirnteil (35) auf der von der keilförmigen Aussparung gebildeten Wandfläche (14) eine sich senkrecht zur Ebene des Einschnitts (15) und im wesentlichen zu beiden Seiten des Kanals (2) erstreckende vorstehende Schnappleiste oder Schnappaussparung aufweist, und
- **daß** an dem anderen Stirnteil auf der von der keilförmigen Aussparung gebildeten Wandfläche (14') eine sich senkrecht zur Ebene des Einschnitts (15) und im wesentlichen zu beiden Seiten des Kanals (2) erstreckende ergänzende Schnappaussparung oder Schnappleiste für einen Schnappeingriff von Schnappleiste und Schnappaussparung in der den Rohrbogen umschließenden Lage des Isolierstücks vorgesehen ist.

2. Isolierstück nach Anspruch 1
- mit wenigstens zwei keilförmigen Aussparungen (18, 19), die sich senkrecht zur Ebene des Einschnitts (15) und zu beiden Seiten davon erstrecken und die zwei Stirnteile (35, 36) und wenigstens einen Mittelkeil (3, 3') bilden,
**dadurch gekennzeichnet,**
- **daß** der Mittelkeil (3, 3') auf seinen beiden Keilflächen (13, 13') jeweils eine sich senkrecht zur Ebene des Einschnitts (15) und im wesentlichen zu beiden Seiten des Kanals (2) erstreckende vorstehende Schnappleiste (6, 6') oder Schnappaussparung aufweist, und
- **daß** in den von den keilförmigen Aussparungen (18, 19) gebildeten Wandflächen (14, 14') der beiden Stirnteile (35, 36) des Zylinders (1) sich senkrecht zur Ebene des Einschnitts (15) und im wesentlichen zu beiden Seiten des Kanals (2) erstreckenden ergänzenden Schnappaussparungen (7, 7') oder Schnappleisten für einen Schnappeingriff der Schnappleisten und Schnappaussparungen in der den Rohrbogen umschließenden Lage des Isolierstücks vorgesehen sind.

3. Isolierstück nach Anspruch 2, **dadurch gekennzeichnet,**
- **daß** der Zylinder (1) einen von der Seite des Einschnitts (15) in die Zylinderaußenwand (16) ausgehenden Ausschnitt in Form eines Zylindersegments (20) mit unter einem dem halben Rohrbogenwinkel entsprechenden Winkel zur Ebene des Einschnitts (15) und aufeinander zu geneigte Stirnflächen (8, 8') und mit einem zur Achse (21) des Zylinders (1) parallelen und zu Ebene des Einschnitts (15) senkrechten Wandabschnitt (22) aufweist, in welchem die ebenen Grundflächen der beiden keilförmigen Aussparungen (18, 19) liegen.

4. Isolierstück nach Anspruch 3, **dadurch gekennzeichnet,**
- **daß** für einen 90°-Rohrbogen die Stirnflächen (8, 8') des Ausschnitts für das Zylindersegment (20) unter einem Winkel von 45° zur Ebene des Einschnitts (15) und aufeinander zu geneigt sind,
- **daß** der Mitteilkeil (3, 3') durch wenigstens eine weitere mit ihrer Grundfläche in dem Wandabschnitt (22) des Zylindersegments (20) liegende und mit ihrer Keilkante (19) vor einem Verbindungsabschnitt (17) endende keilförmige Aussparung in zwei Keilabschnitte (3, 3') unterteilt ist, wodurch deren Keilkanten (23, 23') im wesentlichen in der Ebene des Wandabschnitts (22) des Zylindersegments (20) liegen, und
- **daß** die Keilabschnitte (3, 3') an den einander zugewandten Wandflächen (26, 27) eine sich senkrecht zur Ebene des Einschnitts (15) und im wesentlichen zu beiden Seiten des Kanals (2) erstreckende Schnappleiste (5) und eine Schnappaussparung (10) mit gleicher Erstreckung für den gegenseitigen Eingriff bei Bildung des Isolierstücks am Rohrbogen aufweisen.

5. Isolierstück nach Anspruch 3 oder 4, **dadurch gekennzeichnet, daß** die Keilwinkel der keilförmigen Aussparungen (18, 19, 25) gleich groß sind.

## Claims

1. An insulating piece for a pipe elbow, comprising a cylinder (1) of elastic insulating material, in particular foamed material,
- having a central passage (2) extending between its end faces (11,12) and adapted in its cross-section to the dimensions of the pipe,
- having an incision (15) extending from the passage (2) up to the cylindrical outer wall (16) radially in an axial plane between the end faces (11,12), and
- having at least one wedge-shaped recess which extends perpendicular to the plane of the incision (15) and on both sides thereof forming two end parts (35,36) converging into a wedge edge, and
- having a connecting portion (17) which is disposed between the wedge edge (9) and the cylindrical outer wall (16) and which is of a thickness ensuring that the cylinder (1) is held together and ensuring a hinge function,
**characterised in,**
- **that** one end part (35) has on the wall surface (14) formed by the wedge-shaped recess a snap strip or snap recess extending perpendicular to the plane of the incision (15) and substantially on both sides of the passage (2), and
- **that** at the other end part on the wall surface (14') formed by the wedge-shaped recess there is provided a complementary snap recess, extending perpendicular to the plane of the incision (15) and substantially on both sides of the passage (2), or a snap strip for snap engagement of the snap strip and snap recess in the position of the insulating piece enclosing the pipe elbow.

2. An insulating piece according to Claim 1,
- having at least two wedge-shaped recesses (18,19) which extend perpendicular to the plane of the incision (15) and on both sides thereof, and which form two end parts (35,36) and at least one central wedge (3,3'),
**characterised in that**
- the central wedge (3,3') has on its two wedge surfaces (13,13') a respective protruding snap strip (6,6') or snap recess extending perpendicular to the plane of the incision (15) and substantially on both sides of the passage (2), and
- that in the wall surfaces (14,14') of the two end parts (35,36) of the cylinder (1) formed by the wedge-shaped recesses (18,19) there are provided complementary snap recesses (7,7'), extending perpendicular to the plane of the incision (15) and substantially on both sides of the passage (2), or snap strips for snap engagement of the snap strips and snap recesses in the position of the insulating piece enclosing the pipe elbow.

3. An insulating piece according to Claim 2,
**characterised in**
- **that** the cylinder (1) has a cut-out which extends from the side of the incision (15) into the cylinder outer wall (16) and which is in the form of a cylinder segment (20) with end faces (8,8') inclined at an angle corresponding to half the pipe elbow angle to the plane of the incision (15) and to one another, and with a wall portion (22) parallel to the axis (21) of the cylinder (1) and perpendicular to the plane of the incision (15), in which wall portion are situated the flat base surfaces of the two wedge-shaped recesses (18,19).

4. An insulating piece according to Claim 3,
**characterised in**
- **that** for a 90° pipe elbow the end faces (8,8') of the cut-out for the cylinder segment (20) are inclined at an angle of 45° to the plane of the incision (15) and to one another,
- **that** the central wedge (3,3') is divided into two wedge portions (3,3') by at least one further wedge-shaped recess with its base surface situated in the wall portion (22) of the cylinder segment (20) and ending with its wedge edge (19) in front of a connecting portion (17), whereby their wedge edges (23,23') are situated substantially in the plane of the wall portion (22) of the cylinder segment (20), and
- **that** the wedge portions (3,3') have on the mutually facing wall surfaces (26,27) a snap strip (5) extending perpendicular to the plane of the incision (15) and substantially on both sides of the passage (2), and a snap recess (10) or like extension for mutual engagement when forming the insulating piece on the pipe elbow.

5. An insulating piece according to Claim 3 or 4, **characterised in that** the wedge angles of the wedge-shaped recesses (18,19,25) are equal.

## Revendications

1. Élément d'isolation pour un tuyau coudé, composé d'un cylindre (1) en matériau élastique isolant, et plus particulièrement en mousse, comprenant
- un canal central (2) s'étendant entre ses faces frontales (11, 12) et de section adaptée à la taille du tuyau,
- une incision (15) qui s'étend radialement du canal (2) à la paroi extérieure (16) du cylindre dans un plan axial entre les faces frontales (11, 12) et
- au moins un évidement cunéiforme qui s'étend perpendiculairement par rapport au plan de l'incision (15) et de part et d'autre de celle-ci en formant deux parties frontales (35, 36) qui convergent pour former une arête de l'évidement cunéiforme ainsi
- qu'un segment de liaison (17) situé entre l'arête (9) de l'évidement cunéiforme et la paroi extérieure (16) du cylindre, lequel présente une épaisseur assurant que le cylindre (1) tient ensemble et assurant une fonction de charnière,
**caractérisé en ce que**
- l'une des parties frontales (35) présente, sur la paroi (14) formée par l'évidement cunéiforme, une bande encliquetable en saillie ou un évidement encliquetable qui s'étend perpendiculairement par rapport au plan de l'incision (15) et, pour l'essentiel, de part et d'autre du canal (2) et
- **en ce qu'**est prévu, sur l'autre partie frontale sur la paroi (14') formée par l'évidement cunéiforme, un évidement encliquetable ou une bande encliquetable complémentaire qui s'étend perpendiculairement par rapport au plan de l'incision (15) et, pour l'essentiel, de part et d'autre du canal (2), ledit évidement ou ladite bande servant à faire s'encliqueter la bande encliquetable et l'évidement encliquetable lorsque l'élément d'isolation est positionné de manière à enceindre le tuyau coudé.

2. Élément d'isolation selon la revendication 1, comprenant
- au moins deux évidements cunéiformes (18, 19) qui s'étendent perpendiculairement par rapport au plan de l'incision (15) ainsi que de part et d'autre de celle-ci et forment deux parties frontales (35, 36) ainsi qu'au moins un élément cunéiforme central (3, 3'),
**caractérisé en ce que**
- l'élément cunéiforme central (3, 3') présente, sur chacune de ses deux faces cunéiformes (13, 13'), une bande encliquetable (6, 6') en saillie ou un évidement encliquetable qui s'étend perpendiculairement par rapport au plan de l'incision (15) et, pour l'essentiel, de part et d'autre du canal (2) et **en ce**
- **que** sont prévus, dans les parois (14, 14') des deux parties frontales (35, 36) du cylindre (1), lesquelles sont formées par les évidements cunéiformes (18, 19), des évidements encliquetables (7, 7') ou des bandes encliquetables complémentaires qui s'étendent perpendiculairement par rapport au plan de l'incision (15) et, pour l'essentiel, de part et d'autre du canal (2), lesdits évidements ou lesdites bandes servant à faire s'encliqueter les bandes encliquetables et les évidements encliquetables lorsque l'élément d'isolation est positionné de manière à enceindre le tuyau coudé.

3. Élément d'isolation selon la revendication 2, **caractérisé en ce que**
- le cylindre (1) présente une découpure en forme de segment de cylindre (20) allant du côté de l'incision (15) jusqu'à la paroi extérieure (16) du cylindre et présentant des faces frontales (8, 8') inclinées l'une vers l'autre ainsi que vers le plan de l'incision (15) en formant un angle correspondant à la moitié de l'angle du tuyau coudé ainsi qu'une partie de paroi (22) parallèle à l'axe (21) du cylindre (1) et perpendiculaire au plan de l'incision (15), les surfaces de base planes des deux évidements cunéiformes (18, 19) étant situées dans ladite partie de paroi.

4. Élément d'isolation selon la revendication 3, **caractérisé en ce que**
- pour un tuyau coudé à 90°, les faces frontales (8, 8') de la découpure pour le segment de cylindre (20) sont inclinées l'une vers l'autre en formant un angle de 45° par rapport au plan de l'incision (15),
- **en ce que** l'élément cunéiforme central (3, 3') est divisé en deux éléments cunéiformes (3, 3') par au moins un autre évidement cunéiforme dont la surface de base se trouve dans la partie de paroi (22) du segment de cylindre (20) et dont l'arête (19) se termine devant un segment de liaison (17), les arêtes (23, 23') des éléments cunéiformes se trouvant sensiblement dans le plan de la partie de paroi (22) du segment de cylindre (20) et
- **en ce que** lesdits éléments cunéiformes (3, 3') présentent, sur les parois (26, 27) qui se font vis-à-vis, une bande encliquetable (5) qui s'étend perpendiculairement par rapport au plan de l'incision (15) et, pour l'essentiel, de part et d'autre du canal (2), ainsi qu'un évidement encliquetable (10) s'étendant de la même manière et servant à l'encliquetage de ces deux éléments l'un dans l'autre lorsque l'élément isolant est monté sur le tuyau coudé.

5. Élément d'isolation selon la revendication 3 ou 4, **caractérisé en ce que** les angles des évidements cunéiformes (18, 19, 25) sont égaux.
